# EUROPEAN PATENT APPLICATION

(11) **EP 1 647 938 A1**
(43) Date of publication of application: **19.04.2006**
(21) Application number: 04022618.5
(22) Date of filing: 14.10.2004
(51) Int. Cl.: G06T 17/50

(54) **Integration of a GIS with time and expert information and link of several GIS-applications**

(71) Applicant: Mayer, Walter H., 9500 Villach (AT)
(72) Inventor: Mayer, Walter H., 9500 Villach (AT)

(57) **Abstract**

The present invention combines GIS & TIME & EXPERT information with unlimited combinations of single activities also linked to time and the use of 1 .....n APPLICATIONS within one GIS.

The method is the COMBINATION and INTEGRATION of the elements GIS & TIME & EXPERT information and 1 ..... n different APPLICATIONS or with other words the WHERE (geography), WHAT (database) and WHEN (timeline) linked to 1 ....n applications as well as the DESIGN of these elements within an IT and/or also non IT environment according the above screenshots.

## Description

### FIELD OF THE INVENTION:

The present invention relates generally to the field of geographical information systems. **The present invention relates pirticularly to geographical information in combination with timeline, expert information and the use of different applications within one geoctraphy.**

### BACKGROUND OF THE INVENTION:

A Geographical Information System (GIS) is a layer organized IT system for the representation of vectorized geographical data and optional for raster data. The layer structure allows a GIS to organize its data thematically that can be analysed by users. Geographical information systems represent only a snapshot of the changing geographical situation. In most cases these information changes over time. Geografical objects as well as also the attributes linked to them and stored with the geographical information (like land usage etc.) change over time.

### 1. TIME:

The system consists of two major components, a geographical component (geography and database (attributes) = GIS) and a time line component. Every change the user makes in the geographical component is only valid at a certain time respectively at a specific time period. The GIS system is linked with spatial layers to the time component. This architecture allows the user to change the geography and attributes of the geography dependent of the time.

### 2. EXPERT INFORMATION:

With a further integration of an additional database with expert knowledge, an expert system fulfilling the following dimensions can be realised: geography AND time AND expert knowledge. The expert database can be organized with standard database tools and the activities or general the contents from the expert systems can be represented according their exact time on top of the time line.

### 3. APPLICATION LAYERS:

Further different layers of a GIS system are able to be linked to different applications with different timing and different expert know how base data, that means within one geography as THE integrative factor several applications with different time- and expert systems can be managed within one GIS system.

### DETAILED DESCRIPTION:

A basic GIS System consists of geographical data and attributive data (numbers, text, pics,videos etc.). This basic system is in our case extended with a database that is linked to the attribute database of the GIS system and represents the time component. This time component allows the user to scroll forward and backward in time - future and past, endless - search for a specific moment in time, assign attributes to a GIS object at a certain time (or a time period) and makes GIS objects valid at certain time spans only. Further a "flight" during the time can be done automatically via the generation of an endless sequence of images ― views in GIS terms - representing a specific time.

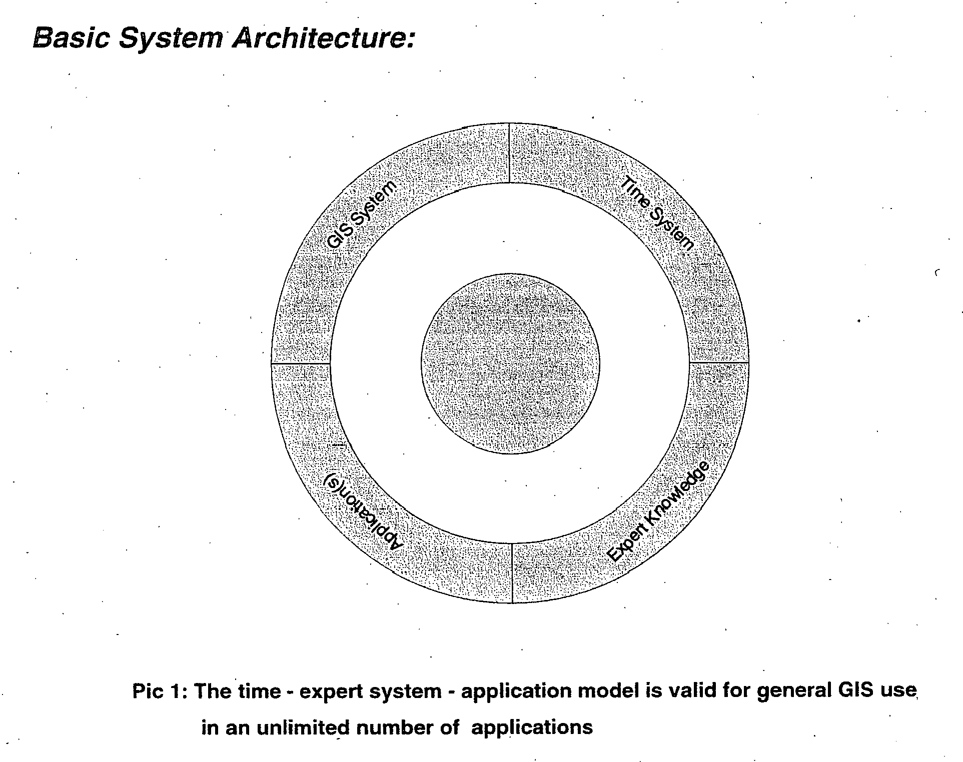

Additional description-of Picture 1:
- GIS System:: geography and database
- Time System:: represented through endless timelines, linked to objects, with symbols, representing activities on top of it
- Application(s):: GIS applications work parallel
- Expert Knowledge:: integration of an expert database

### EXAMPLE OF ONE IMPLEMENTATION:

The following pictures show for better understanding one example how the general **GIS** system, the **TIME** component, the **EXPERT** system and **APPLICATIONS** are combined to create an integrated new type of GIS in the field of e.g. agriculture.

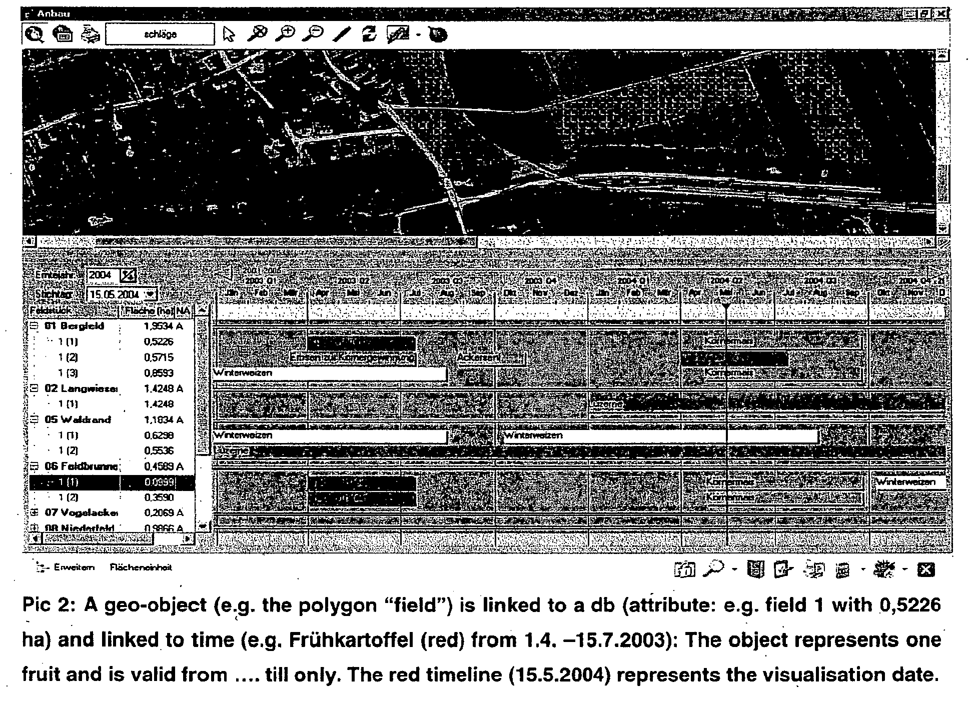

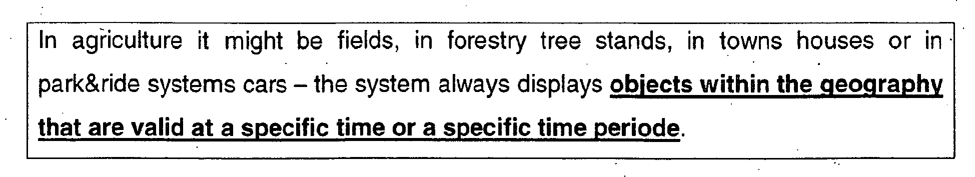

In addition to the information about the geography and time, the system has an additional expert knowledge component. The information about the expert knowledge is stored in an integral database linked to the GIS and the time component. This information enables the user to plan and simulate a certain situation due to the content of this database e.g. activities, the name, its costs, its time etc.

The system is for the general user designed who benefits from the expert knowledge that can be integrated in the database of the time component. This expert information can be updated through the internet, so the user gets in regular time spans updated data from experts for his system. If he is not satisfied with the expert data he might be able to overwrite them. The data of the expert system can easily be configured and changed for various local different situations.
This expert information is further visualized with an editable symbol on top of the time bar, containing all expert information behind and with one click (drag & drop) the access to the database is done.

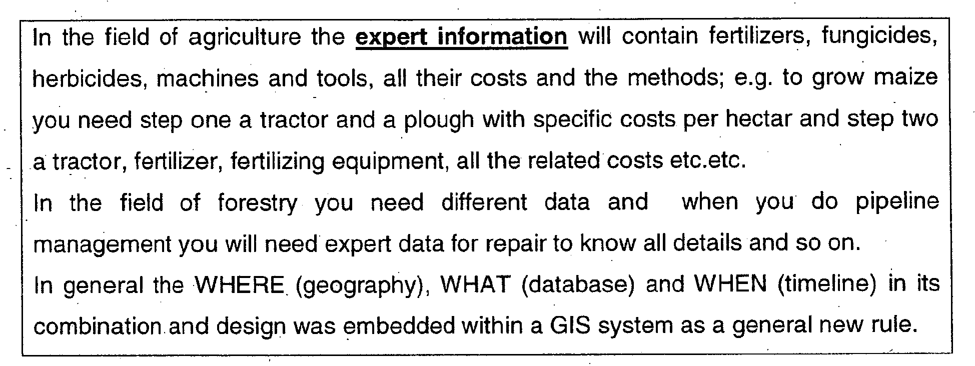

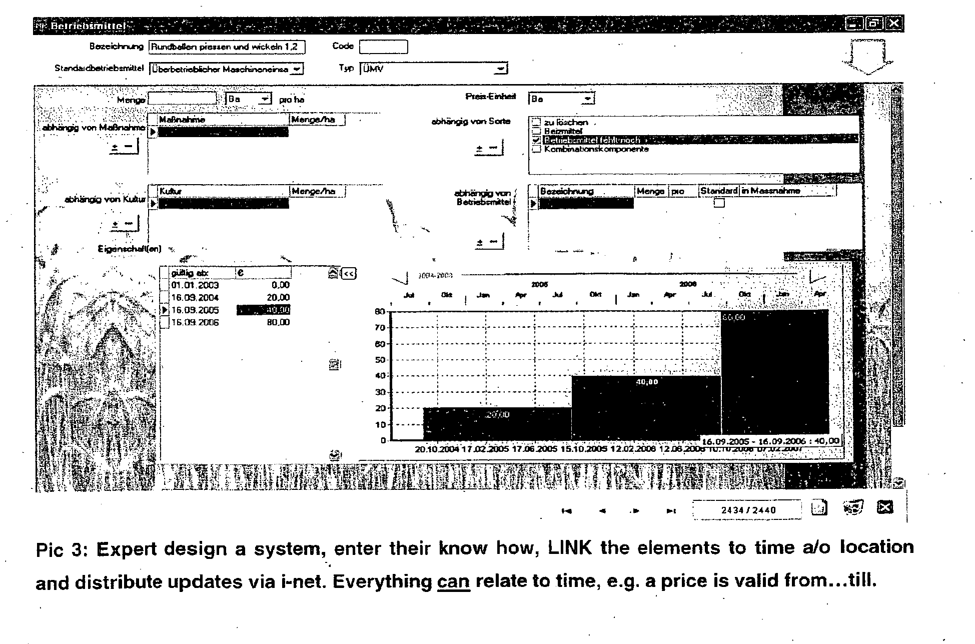

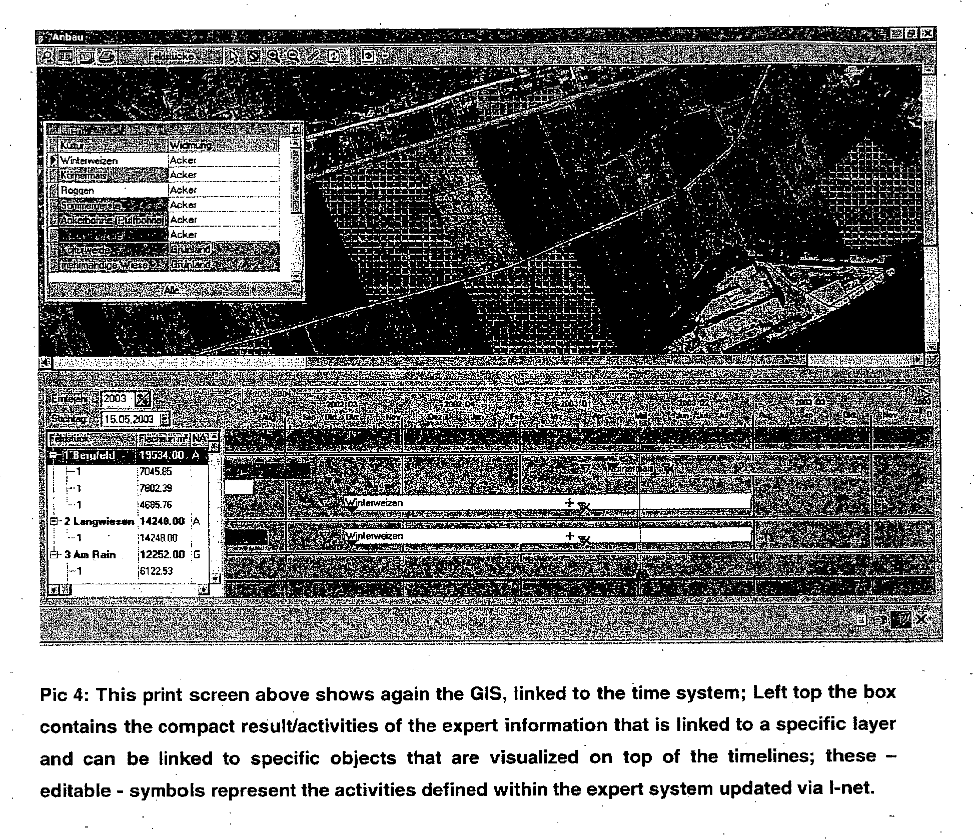

### APPLICATIONS:

More and more it is clear that the benefit for end users of GIS systems is driven by applications, not from the GIS itself. With a simple enhancement of a standard GIS it is easy possible to link one application to specific layers, another application to other layers etc.etc., that means with one representative geography several applications can be driven parallel and a switch from one to another one is easily manageable.

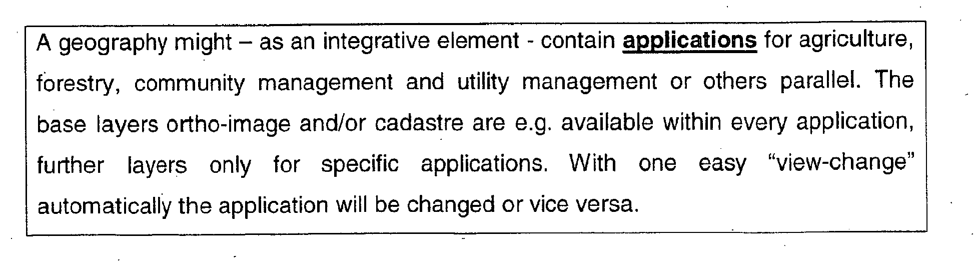

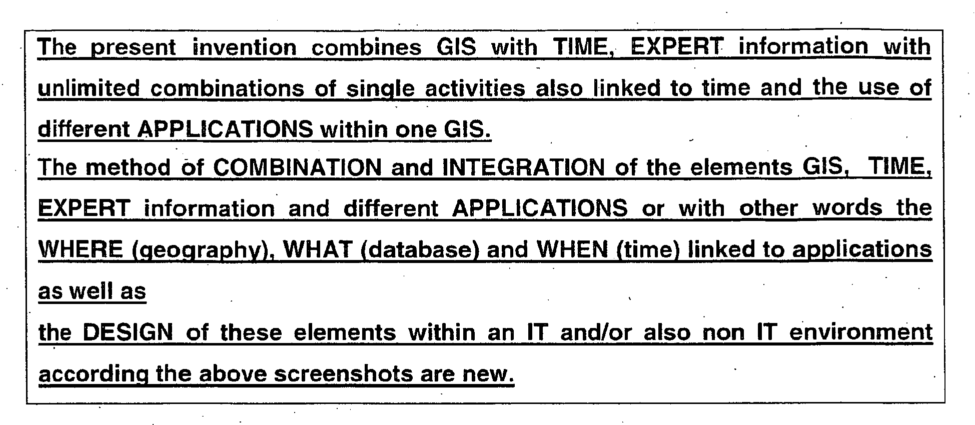

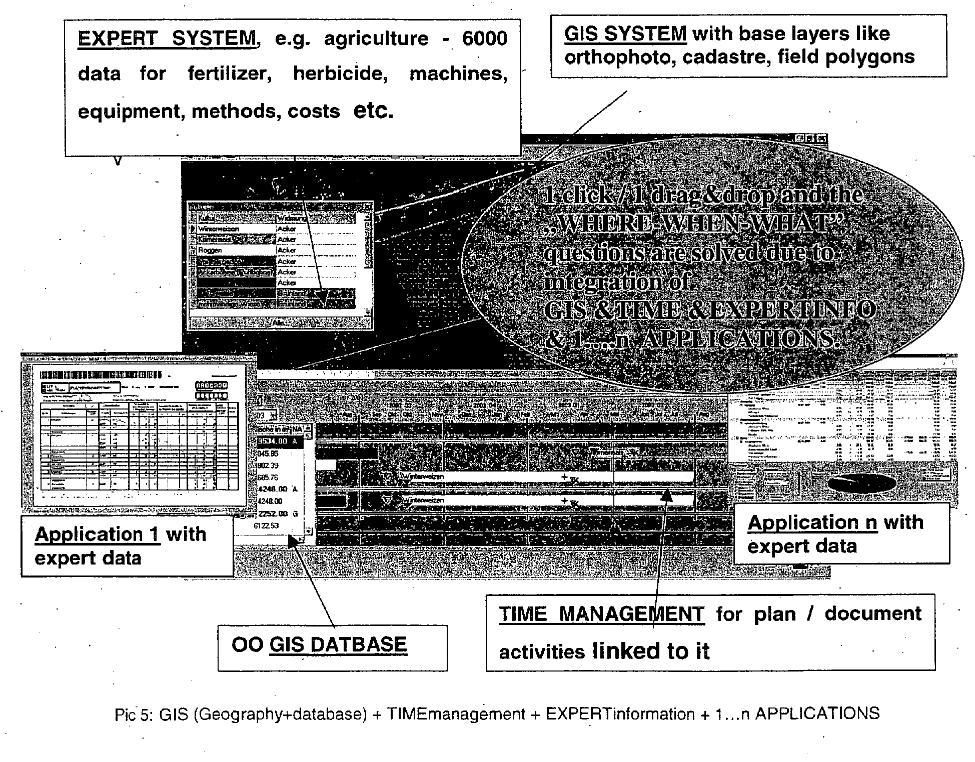

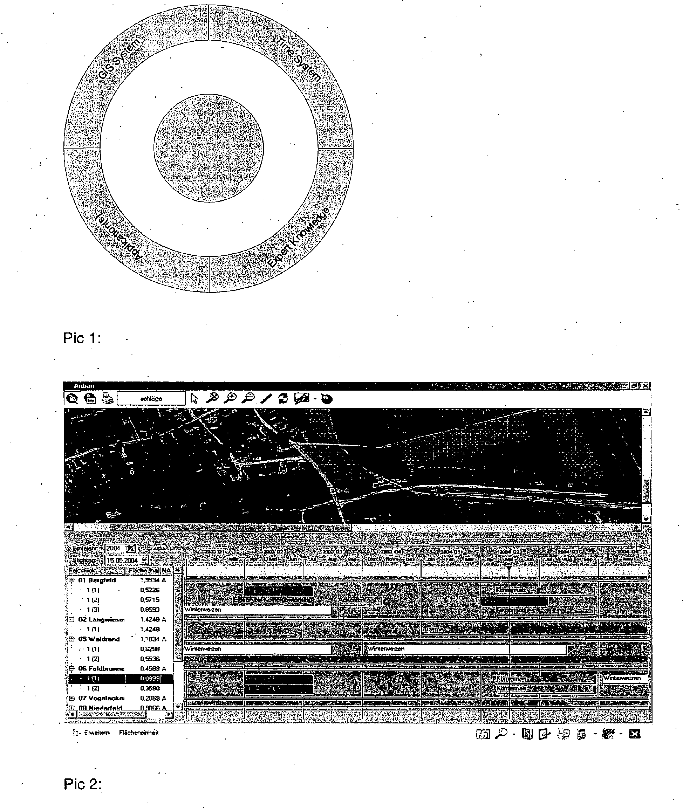

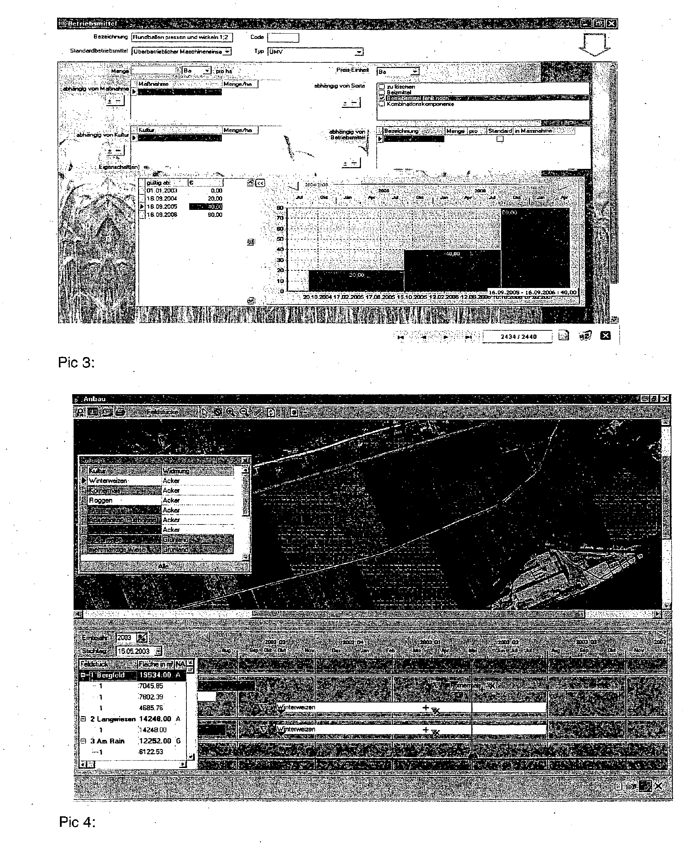

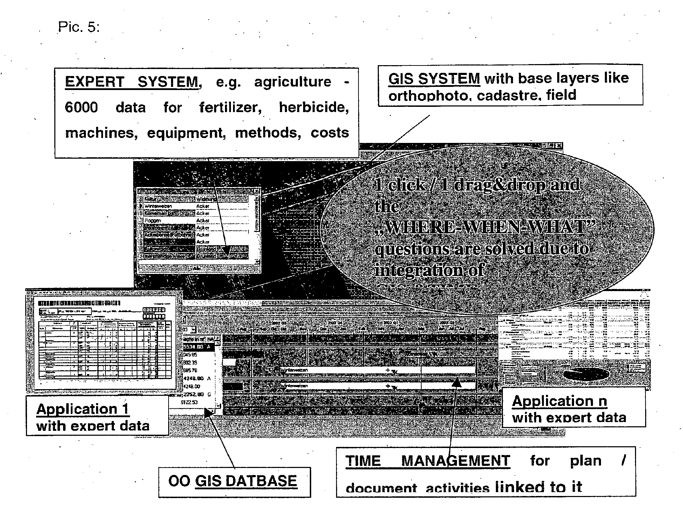

## Claims

1. The graphical design of the combination between GIS, Expert System and Time System shown in document titled "Field of invention"

2. The conceptual principles of the combination between GIS, Expert System, Time System to become a decision support system shown in document titled "Field of invention
